# EUROPEAN PATENT SPECIFICATION

(11) **EP 0 545 577 B1**
(45) Date of publication and mention of the grant of the patent: **17.01.2001**
(21) Application number: 92310528.2
(22) Date of filing: 18.11.1992
(51) Int. Cl.: G06F 3/14, G09G 3/36

(54) **Display system and method**
Anzeigesystem und Verfahren
Système d'affichage et procédé

(30) Priority: 03.12.1991 JP 31881391
(43) Date of publication of application: 09.06.1993
(73) Proprietor: International Business Machines Corporation, Armonk, N.Y. 10504 (US)
(72) Inventor: Asada, Shigeki, Yokohama-shi, Kanagawa-ken (JP); Sohda, Masayuki, Yamato-shi, Kanagawa-ken (JP); Yasuda, Hiroaki, Sagamihara-shi, Kanagawa-ken (JP)
(74) Representative: Burt, Roger James, Dr.

(56) References cited:
- EP-A- 0 360 402
- EP-A- 0 364 307
- EP-A- 0 378 780
- WO-A-90/03019

## Description

The present invention relates to a display system for converting an N bit signal representing 2^{N} gray levels (N being an integer larger than or equal to 2), to an M bit signal representing 2^{M} gray levels (M being an integer satisfying N>M≥1).

US Patent 5059962 describes a display system comprising a Cathode Ray Tube (CRT) display device connected to a personal computer via a digital to analog convertor and a Liquid Crystal Display (LCD) device connected to the computer via a LCD controller. The two devices can display different ranges of gray levels. Specifically, the CRT display device can display 64 gray levels, but the LCD device can display only 16 gray levels. The personal computer supplies a 6 bit signal for each picture element (pel). The 6 bit signal represents the 64 gray levels of the CRT display device. To display 64 gray levels on the LCD device, LCD controller generates four 4 bit signals in response to each 6 bit signal. The 4 bit signal represents the 16 gray levels displayed by one pel of the LCD device. Four pels of the LCD device are used to display the four 4 bit signals. Thus, if the picture supplied by the computer 20 has 320x200 pels, the CRT display device displays a picture having 320x200 pels and the LCD device displays a picture having 640x400 pels.

The aspect ratio of the CRT display device is A:B. The pitch between adjacent horizontal scanning lines in the CRT display device is determined by a vertical scanning signal. The scanning signal is controlled, by values of capacitors, coils, and resistors in a deflection circuit, to repeatedly display the same horizontal pels on two adjacent horizontal scan lines. In other words, 200 x 2 = 400 horizontal scan lines are displayed in dimension B of the CRT display device. The spacing between pels in the LCD device is determined during fabrication of the LCD panel. In general, the aspect ratio C:D of the LCD device differs from the aspect ratio A:B of the CRT display device. Generally, the image displayed on the LCD device is compressed or stretched vertically with respect to the image displayed on the CRT display device.

In accordance with the present invention there is provided a display system for converting N bit signals each, representing 2^{N} grey scale levels, to M bit signals representing 2^{M} grey levels, where N is an integer larger than or equal to 2 and M is an integer satisfying N>M≥1, the system comprising: means for separating each of the N bit signals into higher order M bits and N-M bits; 2^{N-M} tables each storing a distinctive set of PxQ modification values satisfying PxQ≥2^{N-M}: means for selecting one of the tables as a function of the N-M bits; means for detecting a difference between a first set of modification values and a second set of modification values of the selected table, means for exchanging the first set of modification values and the second set of modification values to generate a modified table from the selected table; means for adding the M bits of one N bit signal and each of the modification values of one of said modified or the selected table to generate a set of PxQ M bit signals; and means for supplying the set of M bit signals to a display device of 2^{M} grey levels.

This advantageously permits the addition of pel lines to the picture displayed on the LCD device to bring the aspect ratio of the LCD device into line with that of the CRT device without introducing inconsistent grey levels into the picture.

The display device preferably receives the first and second sets of PxQ M bit signals to display them on Q image lines and the same image as that of the Qth image line on one additional line.

Viewing the present invention from a second aspect, there is provided a method for converting N bit signals each, representing 2^{N} grey levels, to M bit signals representing 2^{M} grey levels, where N is an integer larger than or equal to 2 and M is an integer satisfying N>M≥1, said method comprising the steps of: separating each of said N bit signals into higher M bits and lower N-M bits; creating 2^{N-M} tables each of which stores a distinct set of PxQ modification values satisfying PxQ≥2^{N-M}; selecting one of said tables using said N-M bits; conditionally detecting unequality between first set of modification values and second set of modification values of said selected table; conditionally exchanging said first set of modification values and said second set of modification values to generated a modified table from said selected table; conditionally adding said M bits of one N bit signal and each of the modification values of one of said modified or said selected table to generate a set of PxQ M bit signals; and supplying said set of M bit signals to a display device of 2^{M} grey levels.

Preferred embodiments of the present invention will now be described with reference to the accompanying drawings, in which:
Figure 1 is a block diagram of a display system of the present invention;
Figure 2 is a block diagram of a conventional display system;
Figure 3 shows the number of horizontal and vertical pels and aspect ratio of various display devices;
Figure 4 is a flow chart of an embodiment of the present invention.
Figures 5, 6 and 7 are pel patterns generated by the display system of the present invention;
Figure 8 is a flow chart of another embodiment of the present invention;
Figure 9 is a pel pattern generated in accordance with the flow chart shown in Figure 8;
Figure 10 is an example of an alternate table; and
Figures 11, 12, 13 and 14 show pel patterns generated by a display system of the prior art and in accordance with the present invention.

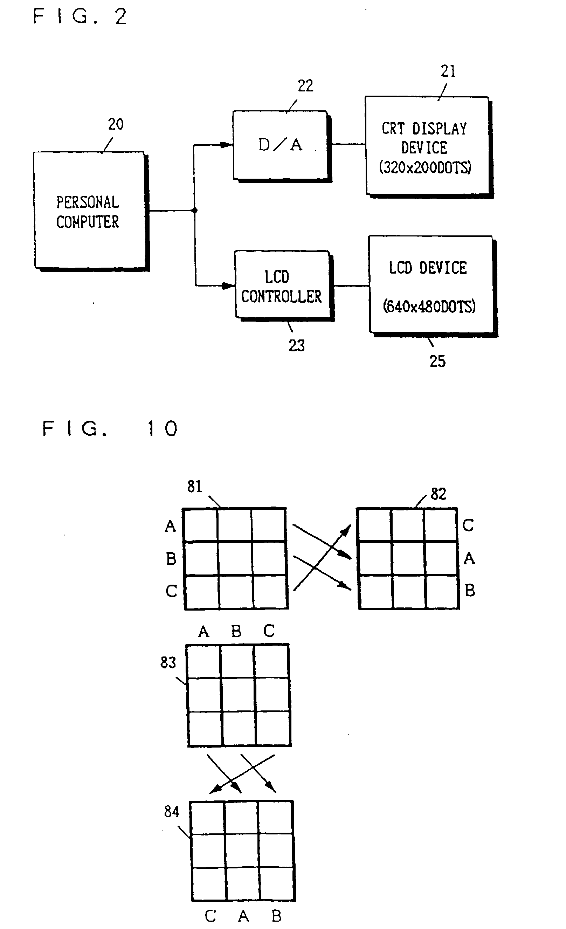

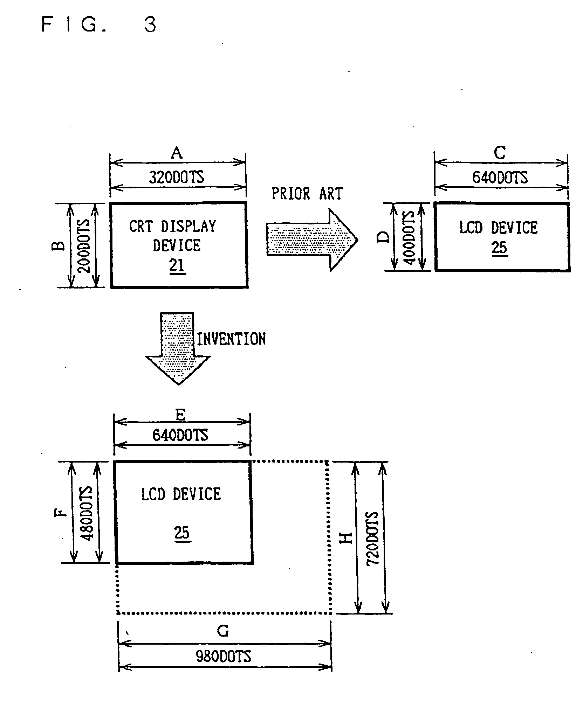

Referring to Figure 2, an example of a conventional display system comprises a CRT display device 21 and an LCD display device 25 both for displaying data produced by a personal computer 20. The video output of computer 20 is connected to CRT device 21 and LCD device 25 through a digital-analog converter 22 and a LCD controller 23, respectively. CRT device 21 displays 64 gray levels and LCD device 25 displays 16 gray levels. Computer 20 supplies a 6 bit signal for each picture element. The 6 bit signal represents the 64 gray levels of the CRT display device 25. To display the 64 gray levels on LCD device 25, LCD controller 23 generates four 4 bit signals in response to each 6 bit signal. The 4 bit signal represents the 16 gray levels displayable by one pel of LCD device 25. Four pels of LCD device 25 are used to display the four 4 bit signals. Thus, referring to Figure 3, if the picture supplied by computer 20 has 320x200 pels, CRT device 21 displays a picture having 320x200 pels and LCD device 25 displays a picture having has 640x400 dots.

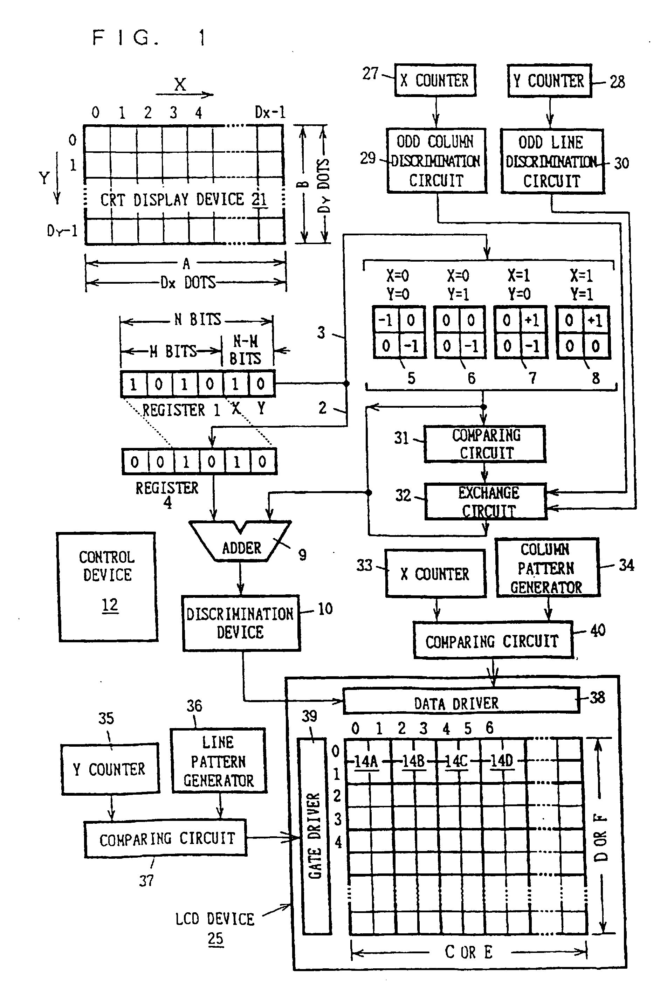

Referring to Figure 1, blocks 1, 2, 3, 4, 5, 6, 7, 8, 9, 12, 21 and 25 of LCD controller 23 are described in detail in the aforementioned US Patent 5059962, the contents of which is included herein in full. What follows is a brief description of controller 23 in operation.

It will be assumed for the purpose of description that control device 12 generates 6 bit gray level signal 101010 (decimal value 42) which is stored in register 1. Control device 12 then loads the most significant 4 bits, M bits (1010), of the 6 bit signal into the least significant 4 bit positions of register 4 through line 2. The most significant 2 bit positions of register 4 are always 00. The reason for concatenating the most significant 2 bits in register 4 will be described below. Control device 12, on line 3, supplies the least significant 2 bits, N-M bits, of the 6 bit signal 101010 as an address to select one of Tables 5, 6, 7 and 8. Tables 5, 6, 7, and 8 are known as dither matrices. The number of tables used is determined by 2^{N-M}. Thus, 4 tables are prepared. The least significant 2 bits are represented by x and y in Figure 1. N is an integer larger than or equal to 2 and M is an integer satisfying N>M≥1. Since x=1 and y=0, Table 7 is selected. Each table stores 4 modification values, PxQ, satisfying PxQ≥2^{N-M}. Each set of modification values corresponds to the 4 pels of each one of areas 14A, 14B, 14C, 14D, etc. in LCD device 25. The modification values are represented in Figure 1 by decimal values, but as 0 corresponds to the binary value 00000 and 1 corresponds to the binary value 00001, these binary values are actually stored in the tables. The modification value can be any value in the range from +15 to -15. The range +3 to -3 is however preferred for fidelity. The modification value has 5 bits representing +15 to -15. A negative value is represented by the complement of 2. A single most significant bit is concatenated to the 5 bits from the table by a sign extension. For example, where the modification value is +1, 00001 is stored in the table and 0 is concatenated to the 00001 by the sign extension. Thus, the input to adder 9 from the table is 000001. Where the modification value in the table is -1, 11111 is stored in the table, and 1 is concatenated to the 11111 by the sign extension. Thus, 111111 is supplied to adder 9. Since the input to adder 9 from the tables is 6 bits, the input from register 4 is also made to be 6 bits. Thus, the 2 most significant bits 00 are concatenated in register 4.

To generate a gray level signal for pel (0,0) of area 14A of LCD device 25, control device 12 first concatenates bit 0 to the upper left modification value 00000 in Table 7, and supplies 000000 to adder 9. Next, control device 12 activates adder 9 to add inputs from the table and register 4. In other words, 000000 representing the upper left modification value 0 in Table 7 is added to 001010 (2+M bits) to generate 001010. Control device 12 transfers 001010 from adder 9 to discrimination device 10. Discrimination device 10 generates a signal on the output line as a function of the total value received from adder 9. Device 10 generates a signal corresponding to 15 (binary value 1111) on the output line if the total value is larger than 15, generates 0 (binary value 0000) on the output line if the total value is less than 0 (negative), and supplies the lower 4 bits of the total value on the output line if the total value satisfies 15 ≥ total value ≥ 0. To perform the discrimination, the most significant 2 bits of the total value are tested. When the most significant bit is 1, the total value is negative. When the most significant 2 bits are 01, the total value is larger than 15, and when the most significant 2 bits are 00, the relation 15 total value 0 is satisfied. In the case of the upper left modification value in Table 7, the total value is 001010. Thus, the 4 bits 1010 are supplied to LCD device 25 as the gray level signal for pel (0,0) in area 14A. A gray level of 10 (i.e. binary value 1010) is therefore displayed at pel (0,0) of device 25.

To generate a gray level signal for pel (1,0) in area 14A of device 25, control device 12 reads the upper right modification value 1 (binary value 00001) in table 7, converts it to the 6 bits 000001 by the sign extension, supplies those 6 bits to adder 9, and supplies the 6 bits 001010 in 2+M register 4 to adder 9. Next, both of these values are added. The total value is 001011 and satisfies 15 total value 0. Thus, the bits 1011 are supplied to LCD device 25 as the gray level signal for pel (1,0) in area 14A. A gray level of 11 (binary value 1011) is therefore displayed at pel (1,0) of display device 25.

Control device 12 performs the level conversion operation for the second pel (1,0) in pel line 0 of CRT device 21 in the same manner. The gray level signals for pels (2,0) and (3,0) in area 14B of the LCD device 25 are generated and these pels are displayed. Similarly, the third and subsequent pels in pel line 0 of CRT device 21 can be converted, and the two pels in area 14C and the subsequent areas of LCD device 25 can be displayed. In this manner, the same image can be displayed on both devices 21 and 25 while the number of gray levels and number of pels of CRT device 21 differs from those of LCD device 25. As desired, both devices may be operated simultaneously or individually.

The gray level signals for pels of line 1 of LCD device 25 are generated in the same manner. Now, however, the lower left modification value 0 and lower right modification value -1 are used to generate the gray level signals for pels (0,1) and (1,1) respectively.

Referring to Figure 3, the aspect ratio of CRT device 21 is A:B. The pitch between adjacent horizontal scanning lines on CRT device 21 is determined by a vertical scan signal. The scan signal is controlled, by values of capacitors, coils, and resistors in a deflection circuit, to repeatedly display the same horizontal pels on two adjacent horizontal scan lines. In other words, 200 x 2 = 400 horizontal scan lines are displayed in dimension B of CRT device 21. The spacing between pels of LCD device 25 is determined during fabrication of the LCD panel. Conventionally, the aspect ratio C:D of LCD device 25 differs from the aspect ratio A:B of CRT device 21. Usually, the picture produced by LCD device 25 is compressed or stretched vertically with respect to the picture displayed on CRT device 21.

In an example of a display system of the present invention, LCD device 25 has 640 horizontal pels and 480 vertical pels to display a picture of the same aspect ratio as that of CRT device 21 (A:B = E:F). The pel spacing of the 640X480 pel LCD device is equal to that of the conventional 640x400 pel LCD device. To realise A:B = E:F, one horizontal picture line is inserted every five horizontal picture lines. However, if the same picture information as that on the preceding image line is repeatedly displayed on the inserted line, the conventional gray level setting algorithm described above can produce visible mismatches between adjacent lines.

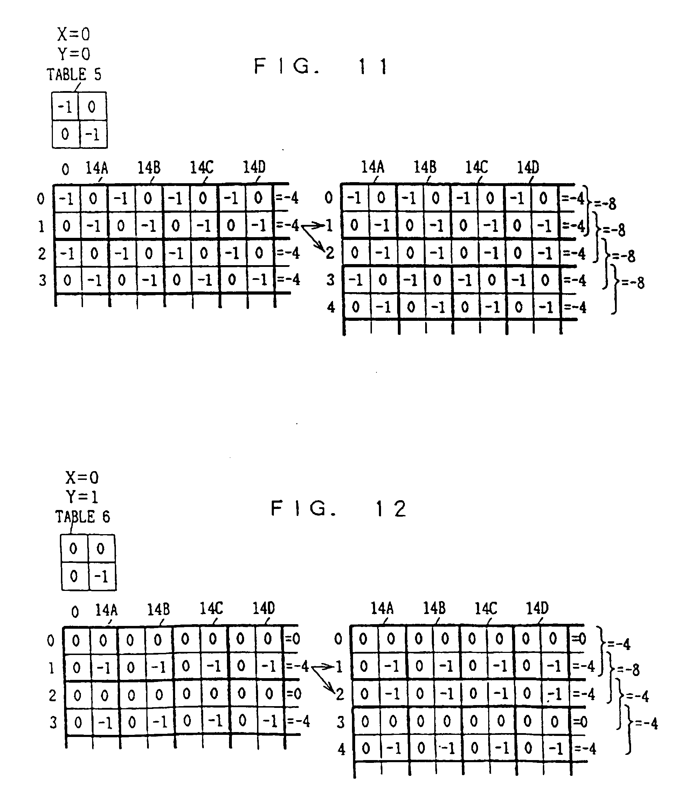

Figures 11 to 14 show the effect of the additional lines on the picture. In Figures 11 to 14, the insets are the 2x2 dither matrix tables 5-8 in Figure 1. The leftmost patterns show pels of the 640X400 LCD device generated conventionally as described in the aforementioned US Patent 5059962. The rightmost patterns show pels for the 640X480 pel LCD device generated by inserting additional lines in accordance with the present invention. Although the sum of the value (M bits) and the modification value of the tables is displayed in each pel of LCD device 25, only the modification values are shown in Figures 11-14, since the value (M pels) is effectively a constant. Referring to Figure 1, Tables 5, 6, 7 and 8 of 2x2 pels, as mentioned earlier, are the dither matrices for the four gray levels specified by bits X and Y (M-N bits) in register 1. The human eye sees each 2x2 dither pel pattern as a single pel.

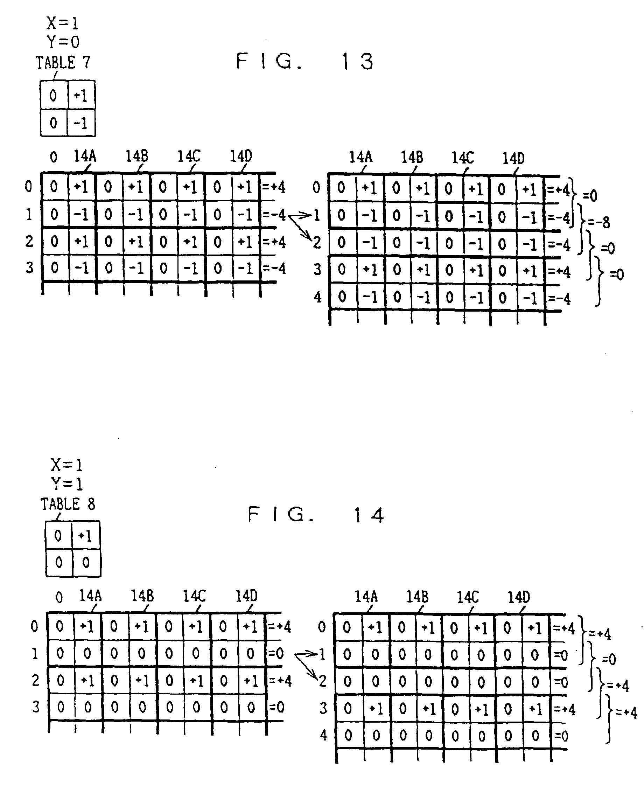

Referring to Figures 11 to 14 again, all the leftmost pel patterns appear to the human eye to be at the same gray level because the sums of the gray levels in any of the 2x2 matrices in all the leftmost pel patterns have the same value. Specifically, the sum of the gray levels of any 2x2 dot matrix of the leftmost pel pattern in Figure 11 is -2. Similarly, the sum in Figure 12 is -1, the sum in Figure 13 is 0, and the sum in Figure 14 is +1. However, when a horizontal pel line 2 having the same pel pattern as that of the preceding pel line 1 is inserted, as shown in the rightmost pel patterns of Figures 11 to 14, a line of the picture of a different gray level to the remaining portion is observed by the human eye in Figures 12 to 14.

Referring to Figure 11, the sums of gray levels of pairs of pel lines 0 and 1, 1 and 2, 2 and 3, and 3 and 4 of the rightmost pel patterns are equal to the value -8. In other words, all the sums are equal to each other. Thus, the rightmost pel pattern with added pel line 2 appears to the human eye to be a smooth gray scale picture. The sums of the gray levels of pel lines 1 and 2 in Figures 12 to 14 differ from the sums of the pel lines 0 and 1, 2 and 3, 3 and 4. Thus, pel lines 1 and 2 appear to the human eye as a line of the picture of a different gray level to the remaining portion. The quality of the displayed picture is thus degraded.

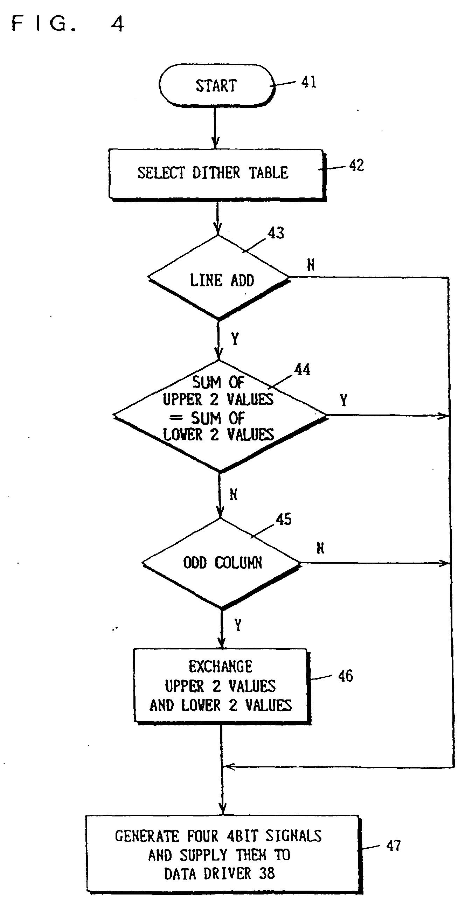

With reference to Figure 4, to remove the degradation in accordance with the present invention, starting at pel position (0,0), control device 12 resets registers 1 and 4, X counter 27, Y counter 28 and Y counter 35. In accordance with the present invention, control device 12 utilizes an odd column discrimination circuit 29, a line pattern generator 36 and a comparing circuit 37 because, in this case, horizontal lines are inserted into the picture displayed on LCD device 25. It is assumed, for the purpose of the following description, that the 6 bit signals for all pels on lines 0 and 1 of CRT device 21 is 101010.

### Operation A

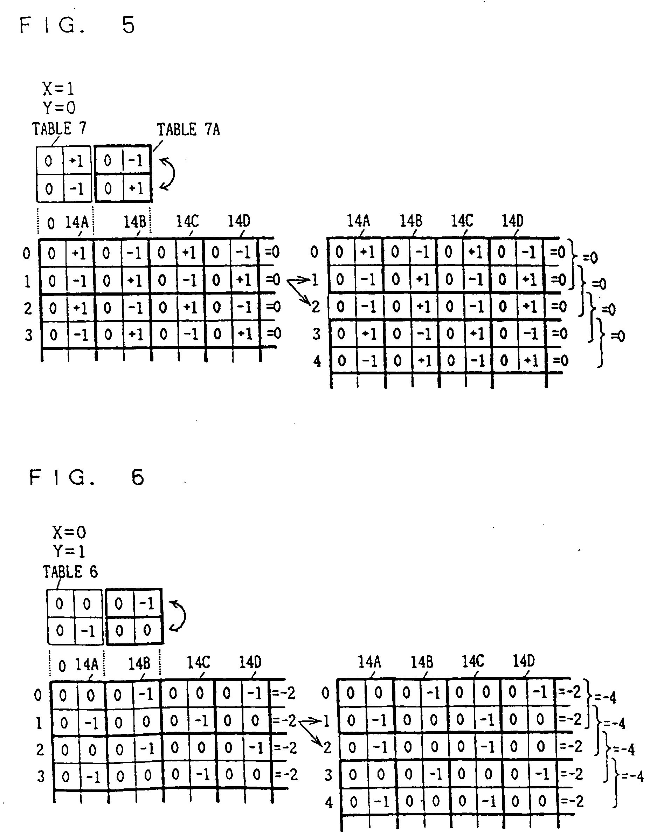

At block 41, control device 12 stores the 6 bit signal 101010 for pel position (0,0) of CRT device 21 in register 1, and, in block 42, control device 12 selects one of the dither tables, table 7. At block 43, any requirement for the addition of a horizontal line such as line 2 of the rightmost pel pattern in Figure 5 is determined. If not, operation proceeds to block 47. If so, as in the example case, operation proceeds to block 44. At block 44, comparing circuit 31 compares the sum, +1 in this case, of the upper 2 values of dither table 7 with the sum, -1 in this case, of the lower 2 values of table 7. If the sums are equal, operation proceeds to block 47. If the sums are not equal, as in this case, then operation proceeds to block 45. At block 45, odd column discrimination circuit 29 determines whether the 6 bit signal is used for an odd column pel of CRT display device 21. If so, operation proceeds to block 46. If not, as in this case, then operation proceeds to block 47. At block 47, adder 9 and discrimination device 10 generate, in the manner hereinbefore described, the gray levels, such as 0 and +1, of the upper two pels (on pel line 0) in area 14A of the rightmost pel pattern in Figure 5.

### Operation B

Next, the gray levels of the upper two pels of area 14B on pel line 0 of the rightmost pel pattern in Figure 5 are generated. X counter 27 is advanced to 1. Therefore, control device 12 stores the 6 bit signal 101010 of pel position (1, 0) in register 1. At block 42, dither table 7 is selected, and operation proceeds to block 43 from which the response is YES. At block 44, the sum, +1, of the upper two values in table 7 are compared to the sum, -1, of the lower two values in table 7. Because the response from block 44 is NO, operation proceeds to block 45. At block 45, odd column discrimination circuit 29 determines whether the 6 bit signal is being used for an odd or an even column of CRT device 21. Since pel position (1,0) is an odd column, the response from block 45 is YES. Specifically, odd column discrimination circuit 29 generates an output signal for activating an exchange circuit 32. Operation proceeds to block 46. At Block 46, the upper two values 0 and +1 of table 7 are exchanged with the lower two values 0 and -1, as shown in table 7A of Figure 5. Operation proceeds to block 47. In block 47, gray levels 0 and -1 of the upper two pels (on line 0) in area 14B of the rightmost pattern of Figure 5 are generated.

### Operation C

To generate the gray level signals of the upper two pels of area 14C of the rightmost pattern in Figure 5, X counter 27 is advanced to 2, and control device 12 stores the 6 bit signal 101010 of pel position (2,0) of CRT device 21 in register 1. A similar operation to Operation A is then performed. However, in this case, the response of block 45 is NO. Therefore, the exchange of the values of table 7 in block 46 is not performed. Thus, the gray level signals 0 and +1 for the upper two pels of area 14C are generated.

### Operation D

To generate the gray level signals of the upper two pels of area 14D of the rightmost pattern in Figure 5, X counter 27 is advanced to 3, and control device 12 stores the 6 bit signal 101010 of pel position (3,0) of CRT device 21 in register 1. A similar operation to Operation B is then performed. However, in this case, the response of block 45 is YES. Therefore, the exchange of values in table 7 in block 46 is performed. Thus, the gray level signals 0 and -1 for the upper two pels of the area 14D are generated.

In this manner, the 6 bit signals of pel line 0 for CRT device 21 supplied from computer 20 are sequentially stored in register 1 and sequentially processed by the algorithm illustrated in Figure 4 to generate the gray level signals for pels on pel line 0 of LCD device 25. The gray level signals are supplied to data driver 38 of LCD device 25 for displaying the picture on line 0.

The gray level signals for pels of line 1 of LCD device 25 are now generated. Since the 6 bit signals for pels on line 0 of CRT device 21 are used to generate the gray level signals for pels on both lines 0 and 1 of LCD device 25, the above-mentioned 6 bit signals for pel line 0 of CRT device 21 are again sequentially processed by the algorithm of Figure 4. However, the lower two values of tables 7 and 7A are used to generate the gray level signals of pels of line 1 of LCD device 25. In other words, the lower two values 0 and -1 of table 7 are used for even areas 14A and 14C, and the lower two values 0 and +1 of table 7A are used for odd areas 14B and 14D.

Line 2 is now added after line 1 of the rightmost pattern of Figure 5. When the gray scale signal of a pel on line 1 of LCD device 25 is supplied from data driver 38 to pels of LCD device 25, gate lines 1 and 2 are simultaneously activated by a gate driver 39. Y counter 35, a line pattern generator 36 and a comparing circuit 37 insert the line. Y counter 35 is initially reset to 0, and then incremented by control device 12. Control device 12 initially stores 1, 6, 11,... in line pattern generator 36 to indicate the lines after which a new line is added. Comparing circuit 37 compares the value in Y counter 35 with the value in line pattern generator 36. If both values are equal, comparing circuit 37 supplies a signal to gate driver 39. Gate driver 39 sequentially activates the gate lines in synchronism with Y counter 35 when the signal is not supplied from comparing circuit 37. When gate driver 39 is about to activate line 1, and the signal is supplied from comparing circuit 37, gate driver 39 responds by simultaneously activating both lines 1 and 2. The same pel sequence as that on line 1 is thus simultaneously displayed on line 2. The gray level signals for lines 3 and 4 of LCD device 25 are now generated in the same manner.

Referring to Figure 5, in the rightmost pattern, the 2x2 dither pel groups of the picture appear to the human eye as single pels. The sums of gray levels of pairs of lines 0 and 1, 1 and 2, 2 and 3, and 3 and 4 are the same. Specifically, all the sums are equal to 0. By contrast, in Figure 13, where table 7 alone is used, the sum of the gray levels of lines 1 and 2, -8, differs from the other sums, 0. Lines 1 and 2 including plural 2x2 dither pels therefore appear to have a different gray level.

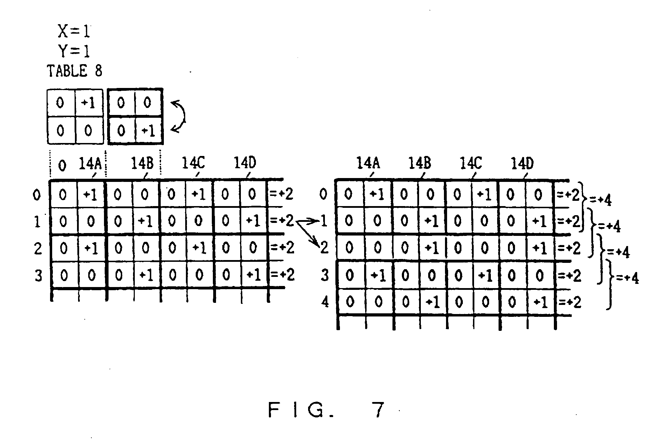

The dot patterns generated in accordance with the present invention via tables 6 and 8 are shown in the rightmost dot patterns in Figures 6 and 7. The sums, -4 and +4, of the gray levels of lines 1 and 2 of the rightmost patterns in Figures 6 and 7 are equal to the sums of the remaining two lines. By contrast, the sums, -8 and 0, of the gray levels of lines 1 and 2 in Figures 12 and 14 generated conventionally differ from other sums.

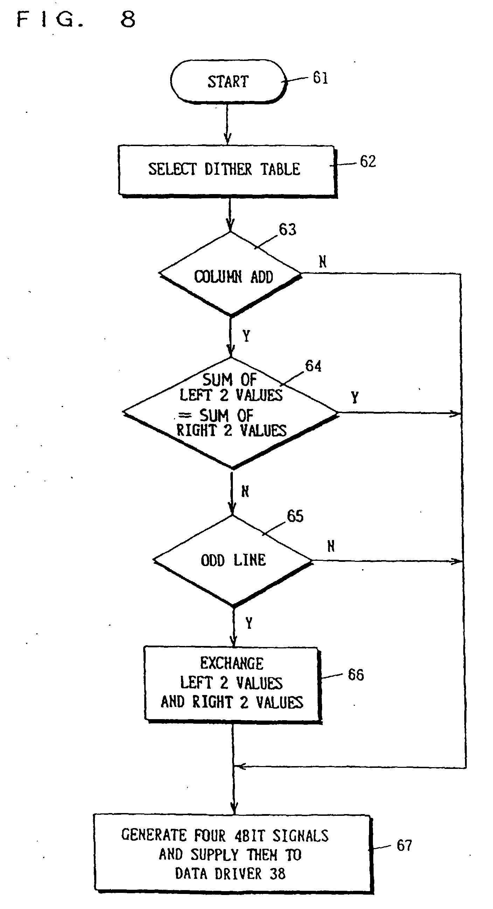

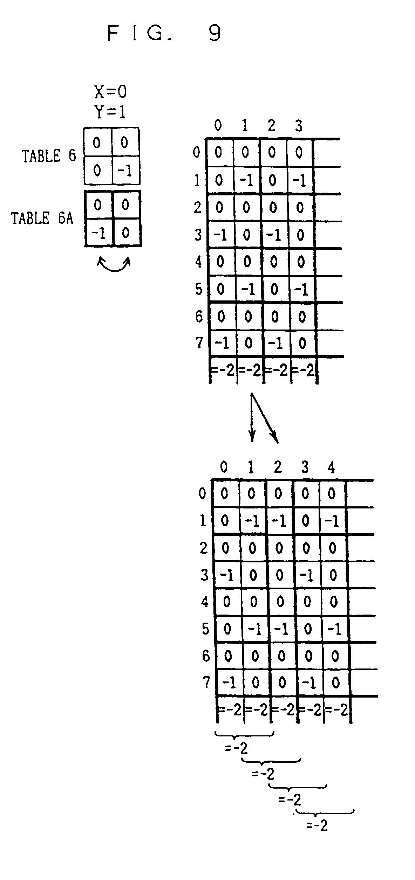

The same problem as that raised by inserting horizontal lines is also raised by inserting vertical columns. Although a Figure illustrating the insertion of vertical columns is excluded from the attached drawings, the problem will be easily understood by those skilled in the art by reference to Figures 12 to 14. Referring to Figure 8, the present invention prevents the introduction of a vertical pel column with different gray level to that of the remaining picture. The algorithm shown in Figure 8 is similar to that shown in Figure 4, except that block 63 determines whether vertical pel columns should be inserted to expand, for example, 640 horizontal pels to 980 pels, block 64 determines whether the sum of the left two values in the dither matrix is equal to the sum of the right two values, block 65 determines whether the 6 bit signal is being used for an odd line of CRT device 21, and block 66 exchanges the left two values and the right two values to generate a modified table, such as table 6A in Figure 9. Therefore, comparing circuit 31 compares the sum of the left two values of the table with the right two values. Exchange circuit 32 exchanges the left two values and the right two values.

Control device 12 initially resets registers 1 and 4, X counter 27, Y counter 28, X counter 33. Control device 12 operates odd line discrimination circuit 30, a column pattern generator 34 and a comparing circuit 40 because, in this case, pel columns are inserted.

The lower pattern in Figure 9 shows a pel column 2 being added. In Figure 9, table 6 is used. Column 2 has the same pels as column 1. The addition of column 2 after column 1 is performed by X counter 33, column pattern generator 34 and comparing circuit 40. When the gray scale signal for column 1 is supplied to data driver 38, the gray scale signal for column 1 is copied into the next column 2 so that the same gray scale pels as those of column 1 are displayed in column 2 of LCD device 25. To perform the insertion, control device 12 initially stores value 1 corresponding to column 1 in column pattern generator 34. X counter 33 is advanced from 0 to 1, 2, 3, .... . Comparing circuit 40 compares the value in X counter 33 with the value in column pattern generator 34 and supplies a signal to data driver 38 when both values are equal, whereby the same gray level pels as those in column 1 are displayed in column 2.

Briefly describing the generation of the lower pattern in Figure 9 using the algorithm shown in Figure 8, the gray level signals of line 0 and 1 are generated, and column 2 is added. For the processing of lines 0 and 1, table 6 is used because block 65 responds with the answer NO. Specifically, odd line discrimination circuit 30 does not supply the activation signal to exchange circuit 32. When the 6 bit signals on line 1 of CRT device 21 are processed, odd line discrimination circuit 30 activates exchange circuit 32 in block 65, and exchange circuit 32 exchanges the right side value 0 and -1 and the left side values 0 and 0 of table 6 in block 66 to produce table 6A. The gray levels on lines 2 and 3 of LCD device 25 are thus displayed, as shown in the lower pattern of Figure 9. The operation is repeated to generate the gray scale signals of lines 4 to 7 of the lower pattern in Figure 9.

The resultant lower pattern in Figure 9 shows that the sum, -2, of the gray levels of columns 1 and 2 including plural 2x2 dither pel groups is equal to the other sums of the gray levels of columns 0 and 1, columns 2 and 3, and columns 3 and 4. Therefore, in accordance with the present invention, column 1 and 2 does not appear to the human eye to be at a different gray level to the remainder of the picture.

In the embodiments of the present invention hereinbefore described, the tables each included 2x2 matrices. However, it will be appreciated that any tables of PxQ modification values satisfying PxQ≥2^{N-M} can be used. For example, a table including a 3x3 matrix is shown in Figure 10. To perform the exchange of values in the table in block 46, the values in lines A, B and C in table 81 are exchanged to generate table 82, as shown in Figure 10. To perform the exchange in block 66, the values in columns A, B and C in table 83 are exchanged to generate table 84.

As described hereinbefore, the present invention prevents the appearance of pel lines of different gray level through the insertion of horizontal pel lines or columns to the picture displayed on an LCD device. In accordance with the present invention, this is achieved by determining whether or not to shift compensation values in a dither matrix table depending on whether or not a corresponding pel line is to be inserted.

## Claims

1. A display system for converting N bit signals each, representing 2^{N} grey scale levels, to M bit signals representing 2^{M} grey levels, where N is an integer larger than or equal to 2 and M is an integer satisfying N>M≥1, the system comprising:
means (1) for separating each of the N bit signals into higher order M bits and N-M bits;
2^{N-M} tables (5,6,7,8) each storing a distinctive set of PxQ modification values satisfying PxQ≥2^{N-M}:
means (12) for selecting one of the tables as a function of the N-M bits;
means (31) for detecting a difference between a first set of modification values and a second set of modification values of the selected table,
means (32) for exchanging the first set of modification values and the second set of modification values to generate a modified table from the selected table;
means (9) for adding the M bits of one N bit signal and each of the modification values of one of said modified or the selected table to generate a set of PxQ M bit signals; and
means (10) for supplying the set of M bit signals to a display device of 2^{M} grey levels.

2. A display system according to Claim 1, wherein the system comprises means (35,36,37 & 33,34,40) for detecting the need to add a line or column, and wherein the detecting means and exchanging means are operable in response to said need.

3. A display system according to Claim 1 or 2, wherein the system comprises means (27,29 & 28,30) for detecting whether a line or column is odd, and wherein the exchanging means are operable in response to said need.

4. A display system according to Claim 1, 2 or 3, wherein the display device receives the first and second sets of PxQ M bit signals to display them on Q image lines and the same image as that of the Qth image line on one additional line.

5. A display system as claimed in Claim 1, wherein said first set of modification values in said table are P modification values arranged in first horizontal line in said table, and said second set of modification values in said table are P modification values arranged in second horizontal line in said table.

6. A display system as claimed in Claim 1, wherein said first set of modification values in said table are Q modification values arranged in first vertical column in said table, and said second set of modification values in said table are Q modification values arranged in second vertical line in said table.

7. A method for converting N bit signals each, representing 2^{N} grey levels, to M bit signals representing 2^{M} grey levels, where N is an integer larger than or equal to 2 and M is an integer satisfying N>M≥1, said method comprising the steps of:
separating (1) each of said N bit signals into higher M bits and lower N-M bits;
creating 2^{N-M} tables (5,6,7,8) each of which stores a distinct set of PxQ modification values satisfying PxQ≥2^{N-M};
selecting (12) one of said tables using said N-M bits;
conditionally detecting (31) unequality between first set of modification values and second set of modification values of said selected table;
conditionally exchanging (32) said first set of modification values and said second set of modification values to generated a modified table from said selected table;
adding (9) said M bits of one N bit signal and each of the modification values of one of said modified or said selected table to generate a set of PxQ M bit signals; and
supplying (10) said set of M bit signals to a display device of 2^{M} grey levels.

8. A method as claimed in Claim 7, wherein said display device receives said first and second sets of PxQ M bit signals to display them on Q image lines and the same image as that of Qth image line on one additional line.

9. A method as claimed in Claim 7, wherein said first set of modification values in said table are P modification values arranged in first horizontal line in said table, and said second set of modification values in said table are P modification values arranged in second horizontal line in said table.

10. A method as claimed in Claim 7, wherein said first set of modification values in said table are Q modification values arranged in first vertical column in said table, and said second set of modification values in said table are Q modification values arranged in second vertical column in said table.

## Patentansprüche

1. Anzeigesystem zum Umwandeln jedes von N-Bit-Signalen, d1e 2^{N} Grauskalenwerte darstellen, in M-Bit-Signale, die 2^{M} Grauwerte darstellen, wobei N eine ganze Zahl größer als oder gleich 2 ist und M eine ganze Zahl ist, für die gilt N > M ≥ 1, wobei das System umfasst:
Mittel (1) zum Trennen jedes der N-Bit-Signale in höherstellige M Bits und M-N Bits,
2^{N-M} Tabellen (5, 6, 7, 8), von denen jede eine bestimmte Menge von P x Q Modifikationswerten speichert, für die gilt P x Q ≥ 2^{N-M},
Mittel (12) zum Auswählen einer der Tabellen als eine Funktion der N-M Bits,
Mittel (31) zum Feststellen einer Differenz zwischen einer ersten Menge von Modifikationswerten und einer zweiten Menge von Modifikationswerten der ausgewählten Tabelle,
Mittel (32) zum Austauschen der ersten Menge von Modifikationswerten und der zweiten Menge von Modifikationswerten, um aus der ausgewählten Tabelle eine modifizierte Tabelle zu erzeugen,
Mittel (9) zum Addieren der M Bits eines N-Bit-Signals und jedes der Modifikationswerte einer der genannten modifizierten oder der ausgewählten Tabelle, um eine Menge von P x Q M-Bit-Signalen zu erzeugen, und
Mittel (10) zum Liefern der Menge von M-Bit-Signalen an eine Anzeigeeinrichtung mit 2^{M} Grauwerten.

2. Anzeigesystem nach Anspruch 1, bei dem das System Mittel (35, 36, 37 & 33, 34, 40) umfasst zum Feststellen der Notwendigkeit, eine Zeile oder Spalte hinzuzufügen, und bei dem die Feststellmittel und Austauschmittel als Antwort auf die genannte Notwendigkeit betreibbar sind.

3. Anzeigesystem gemäß Anspruch 1 oder 2, bei dem das System Mittel (27, 29 & 28, 30) umfasst zum Feststellen, ob eine Zeile oder Spalte ungerade ist, und bei dem die Austauschmittel als Antwort auf die genannte Notwendigkeit betreibbar sind.

4. Anzeigesystem gemäß Anspruch 1, 2 oder 3, bei dem die Anzeigeeinrichtung die erste und zweite Menge von P x Q M-Bit-Signalen empfängt, um sie auf Q Bildzeilen anzuzeigen und das gleiche Bild wie das der Qten Bildzeile auf einer zusätzlichen Zeile.

5. Anzeigesystem nach Anspruch 1, bei dem die genannte erste Menge von Modifikationswerten in der genannten Tabelle P Modifikationswerte sind, die in einer ersten horizontalen Zeile in der genannten Tabelle angeordnet sind, und die genannte zweite Menge von Modifikationswerten in der genannten Tabelle P Modifikationswerte sind, die in der zweiten horizontalen Zeile in der genannten Tabelle angeordnet sind.

6. Anzeigesystem nach Anspruch 1, bei dem die genannte erste Menge von Modifikationswerten in der genannten Tabelle Q Modifikationswerte sind, die in einer ersten vertikalen Spalte in der genannten Tabelle angeordnet sind, und die genannte zweite Menge von Modifikationswerten in der genannten Tabelle Q Modifikationswerte sind, die in einer zweiten vertikalen Zeile in der Tabelle angeordnet sind.

7. Verfahren zum Umwandeln jedes von N-Bit-Signalen, die 2^{N} Grauwerte darstellen, in M-Bit-Signale, die 2^{M} Grauwerte darstellen, wobei N eine ganze Zahl ist größer oder gleich 2 und M eine ganze Zahl ist, für die gilt N > M ≥ 1, wobei das genannte Verfahren die Schritte umfasst des:
Trennens (1) jedes der genannten N-Bit-Signale in höherstellige M Bits und niederstellige N-M Bits,
Erstellens von 2^{N-M} Tabellen (5, 6, 7, 8), von denen jede eine bestimmte Menge von P x Q Modifikationswerten speichert, für die gilt P x Q ≥ 2^{N-M},
Auswählens (12) eine der genannten Tabellen unter Benutzung der genannten N-M Bits,
bedingten Feststellens (31) einer Ungleichheit zwischen der ersten Menge von Modifikationswerten und der zweiten Menge von Modifikationswerten der genannten ausgewählten Tabelle,
bedingten Austauschens (32) der genannten ersten Menge von Modifikationswerten und der genannten zweiten Menge von Modifikationswerten, um eine modifizierte Tabelle aus der genannten ausgewählten Tabelle zu erzeugen,
Addierens (9) der genannten M Bits eines N-Bit-Signals und jedes der Modifikationswerte einer der genannten modifizierten oder ausgewählten Tabelle, um eine Menge von PxQ M-Bit-Signalen zu erzeugen, und
Lieferns (10) der genannten Menge von M-Bit-Signalen an eine Anzeigeeinrichtung mit 2^{M} Grauwerten.

8. Verfahren nach Anspruch 7, bei dem die genannte Anzeigeeinrichtung die genannte erste und zweite Menge von P x Q M-Bit-Signalen empfängt, um sie in Q Bildzeilen anzuzeigen und das gleiche Bild wie das der Qten Bildzeile auf einer zusätzlichen Zeile.

9. Verfahren nach Anspruch 7, bei dem die genannte erste Menge von Modifikationswerten in der genannten Tabelle P Modifikationswerte sind, die in einer ersten horizontalen Zeile in der genannten Tabelle angeordnet sind, und die genannte zweite Menge von Modifikationswerten in der genannten Tabelle P Modifikationswerte sind, die in einer zweiten horizontalen Zeile in der genannten Tabelle angeordnet sind.

10. Verfahren nach Anspruch 7, bei dem die genannte erste Menge von Modifikationswerten in der genannten Tabelle Q Modifikationswerte sind, die in einer ersten vertikalen Spalte in der genannten Tabelle angeordnet sind, und die genannte zweite Menge von Modifikationswerten in der genannten Tabelle Q Modifikationswerte sind, die in einer zweiten vertikalen Spalte in der genannten Tabelle angeordnet sind.

## Revendications

1. Système d'affichage destiné à convertir des signaux à N bits chacun, représentant 2^{N} niveaux d'une échelle de gris, en signaux à M bits représentant 2^{M} niveaux de gris, où N est un nombre entier supérieur ou égal à 2 et M est un nombre entier satisfaisant la relation N > M ≥ 1, le système comprenant :
un moyen (1) destiné à séparer chacun des signaux à N bits en M bits d'ordre supérieur et N - M bits,
2^{N-M} tables (5, 6, 7, 8) chacune mémorisant un ensemble distinct de P × Q valeurs de modification satisfaisant la relation P × Q ≥ 2^{N-M} :
un moyen (12) destiné à sélectionner l'une des tables en fonction des N - M bits,
un moyen (31) destiné à détecter une différence entre un premier ensemble de valeurs de modification et un second ensemble de valeurs de modification de la table sélectionnée,
un moyen (32) destiné à échanger le premier ensemble de valeurs de modification et le second ensemble de valeurs de modification afin de générer une table modifiée à partir de la table sélectionnée,
un moyen (9) destiné à additionner les M bits d'un signal à N bits, et chacune des valeurs de modification de l'une de ladite table modifiée ou de la table sélectionnée pour générer un ensemble de P × Q signaux à M bits, et
un moyen (10) destiné à fournir l'ensemble de signaux à M bits à un dispositif d'affichage à 2^{M} niveaux de gris.

2. Système d'affichage selon la revendication 1, dans lequel le système comprend un moyen (35, 36, 37 et 33, 34, 40) afin de détecter le besoin d'ajouter une ligne ou une colonne, et dans lequel le moyen de détection et le moyen d'échange peuvent être actionnés en réponse audit besoin.

3. Système d'affichage selon la revendication 1 ou 2, dans lequel le système comprend un moyen (27, 29 et 28, 30) en vue de détecter si une ligne ou une colonne est impaire et dans lequel le moyen d'échange peut être actionné en réponse audit besoin.

4. Système d'affichage selon la revendication 1, 2 ou 3, dans lequel le dispositif d'affichage reçoit les premier et second ensembles de P × Q signaux à M bits pour les afficher sur Q lignes d'image et la même image que celle de la Q^{ième} ligne d'image sur une ligne supplémentaire.

5. Système d'affichage selon la revendication 1, dans lequel ledit premier ensemble de valeurs de modification de ladite table représente P valeurs de modification disposées dans une première ligne horizontale de ladite table, et ledit second ensemble de valeurs de modification de ladite table représente P valeurs de modification disposées dans une seconde ligne horizontale de ladite table.

6. Système d'affichage selon la revendication 1, dans lequel ledit premier ensemble de valeurs de modification de ladite table représente Q valeurs de modification disposées dans une première colonne verticale de ladite table, et ledit second ensemble de valeurs de modification de ladite table représente Q valeurs de modification disposées dans une seconde colonne horizontale de ladite table.

7. Procédé destiné à convertir des signaux à N bits chacun, représentant 2^{N} niveaux de gris, en signaux à M bits représentant 2^{M} niveaux de gris, où N est un nombre entier supérieur ou égal à 2 et M est un nombre entier satisfaisant la relation N > M ≥ 1, ledit procédé comprenant les étapes consistant à :
séparer (1) chacun desdits signaux à N bits en M bits supérieurs et N - M bits inférieurs,
créer 2^{N-M} tables (5, 6, 7, 8), dont chacune mémorise un ensemble distinct de P × Q valeurs de modification satisfaisant la relation P × Q ≥ 2^{N-M}.
sélectionner (12) l'une desdites tables en utilisant les N - M bits,
détecter de façon conditionnelle (31) une inégalité entre un premier ensemble de valeurs de modification et un second ensemble de valeurs de modification de ladite table sélectionnée,
échanger de façon conditionnelle (32) ledit premier ensemble de valeurs de modification et ledit second ensemble de valeurs de modification afin de générer une table modifiée à partir de ladite table sélectionnée,
additionner (9) lesdits M bits d'un signal à N bits, et chacune des valeurs de modification de l'une de ladite table modifiée ou de ladite table sélectionnée afin de générer un ensemble de P × Q signaux à M bits, et
appliquer (10) ledit ensemble de signaux à M bits à un dispositif d'affichage à 2^{M} niveaux de gris.

8. Procédé selon la revendication 7, dans lequel le dispositif d'affichage reçoit lesdits premier et second ensembles de P × Q signaux à M bits pour les afficher sur Q lignes d'image et la même image que celle de la Q^{ième} ligne d'image sur une ligne supplémentaire.

9. Procédé selon la revendication 7, dans lequel ledit premier ensemble de valeurs de modification de ladite table représente P valeurs de modification disposées dans une première ligne horizontale de ladite table, et ledit second ensemble de valeurs de modification de ladite table représente P valeurs de modification disposées dans une seconde ligne horizontale de ladite table.

10. Procédé selon la revendication 7, dans lequel ledit premier ensemble de valeurs de modification de ladite table représente Q valeurs de modification disposées dans une première colonne verticale de ladite table, et ledit second ensemble de valeurs de modification de ladite table représente Q valeurs de modification disposées dans une seconde colonne verticale de ladite table.
